# EUROPÄISCHE PATENTSCHRIFT

(11) **EP 0 945 329 B1**
(45) Veröffentlichungstag und Bekanntmachung des Hinweises auf die Patenterteilung: **18.12.2002**
(21) Anmeldenummer: 99105576.5
(22) Anmeldetag: 18.03.1999
(51) Int. Cl.: B62D 21/15, B62D 29/00

(54) **Crashelement**
Crash element
Un élément d'absorption de choc

(30) Priorität: 27.03.1998 DE 19813752
(43) Veröffentlichungstag der Anmeldung: 29.09.1999
(73) Patentinhaber: Bayerische Motoren Werke Aktiengesellschaft, 80788 München (DE)
(72) Erfinder: Grünn, Ralf, 85661 Forstinning (DE)

(56) Entgegenhaltungen:
- US-A- 4 231 607
- US-A- 5 000 509

## Beschreibung

Die Erfindung betrifft ein Crashelement gemäß dem Oberbegriff des Anspruchs 1.

Es ist bereits bekannt, in sicherheitsrelevanten Hohl- oder Zwischenräumen einer Fahrzeugkarosserie Blechteile anzuordnen, damit die bei einem Crash auf die Außenhaut der Fahrzeugkarosserie einwirkenden Aufprallkräfte über diese Blechteile an eine Struktur weitergeleitet werden können, in der eine Energieabsorption möglich ist. Die Anordnung solcher Blechteile ist relativ teuer und aufwendig, da diese Blechteile in der Regel mit der Karosserie verschweißt werden müssen. Auch müssen alle Fahrzeugteile, die in diesem Bereich liegen, wie beispielsweise der Kabelbaum, die Bodenverkleidung und/oder die Schallisolierung, der Ausbildung dieser Blechteile entsprechend angepaßt werden. Von Nachteil ist ferner, daß die Wirksamkeit der Blechteile zur Energieabsorption nur in einer Kraftrichtung durch die Form der Blechteile gegeben ist.

Aus der US-5,000,509 ist bereits ein gattungsgemäßes Crashelement für ein Fahrzeug bekannt. Dieses Crashelement dient zur großflächigen und direkten Übertragung von Aufprallkräften, die auf eine äußere Aufprallstelle einwirken und über das Crashelement bis zu einer zur Energieabsorption dienenden Struktur der Fahrzeugkarosserie weitergeleitet werden. Zur direkten Übertragung der Aufprallkräfte ist das vorbekannte Crashelement drucksteif ausgebildet. Dieses Crashelement ist jedoch in einem sicherheitsrelevanten Hohl- oder Zwischenraum der Fahrzeugkarosserie so befestigt, dass der nachträgliche Zugang zu diesem Hohlraum nur durch eine Zerstörung des Crashelementes möglich ist. Dadurch ist dieser Hohlraum nur zur Aufnahme des Crashelemenes nutzbar.

Aufgabe der Erfindung ist es, ein Crashelement zu schaffen, dessen Montage und Manipulation vereinfacht sind und das die bei einem Crash auf die Fahrzeugkarosserie einwirkenden Aufprallkräfte optimal an eine Struktur weiterleitet, in der im wesentlichen der Energieabbau stattfindet.

Diese Aufgabe wird durch die Merkmale des Anspruchs 1 gelöst.

Das erfindungsgemäße Crashelement ist als ein separates Bauteil oder Montageteil ausgebildet, das in den dafür vorgesehenen Hohl- oder Zwischenraum steckbar bzw. montierbar ist. Das Crashelement liegt in der Regel zumindest an den Begrenzungsflächen des Hohl- oder Zwischenraumes an der Fahrzeugkarosserie an, an denen Aufprallkräfte in das Fahrzeuginnere eingeleitet werden können und an denen die Aufprallkräfte über das Crashelement in die zur Energieabsorption dienende angrenzende Struktur weitergeleitet werden können. Die Steifigkeit bzw. Druckfestigkeit des erfindungsgemäßen Crashelementes ist so ausgelegt, daß das Crashelement den bei einem Aufprall oder Crash entstehenden Kraftimpuls direkt und mit minimaler Energieabsorption an die zum Energieabbau der Aufprallenergie vorgesehenen und an das Crashelement angrenzenden Struktur großflächig überträgt. Von Vorteil ist ferner, daß durch das Crashelement Struktur- und Montageteile, wie z. B. ein Gurtautomat, bei einem Aufprall in ihrer Position verbleiben und somit nicht oder nur geringfügig in den Fahrzeuginnenraum eindringen können.

Vorteilhafterweise ist das erfindungsgemäße Crashelement als ein Schaumteil ausgebildet, das zur Recyclebarkeit aus einem wiederverwertbaren Werkstoff besteht. Solche Werkstoffe können Kunststoffschäume oder Metallschäume sein. Als besonders vorteilhaft hat sich ein Kunststoff-Schaumstoff auf EPS/PPE-Basis erwiesen, bei dem die Dichte bei 250 bis 300 kg/m³ und die Druckfestigkeit bei 18 bis 25 N/mm² liegt. Im Vergleich zu den in dem Hohl- oder Zwischenraum verschweißten Blechteilen können bei der Verwendung des nachträglich montierbaren Crashelementes der Schichtaufbau für die Schallisolierung und dergleichen in der gleichen Art und Weise ausgeführt werden, wie in den angrenzenden Gebieten. Ferner kann der Hohlraum vor der Anordnung des erfindungsgemäßen Crashelements zur Montage von Bauteilen, wie z. B. eines Gurtautomates, genützt werden.

Das erfindungsgemäße Crashelement weist in einer Ausführungsform zumindest in der Montagerichtung an einer seiner Seitenflächen im Querschnitt eine Keilform auf, so daß das Crashelement in den vorgesehenen Hohl- oder Zwischenraum einklemmbar ist. Zusätzlich kann ein Halterungs- oder Stützblech vorgesehen sein, das den Hohl- oder Zwischenraum so begrenzt, daß das Crashelement bei einem Einwirken von Aufprallkräften in der vorgesehenen optimalen Position verbleibt.

Eine Ausführungsform der Erfindung wird nachstehend anhand der Zeichnungen beispielshalber beschrieben. Dabei zeigen:
- Figur 1: eine perspektivische Ansicht eines Bodenabschnittes einer Fahrzeugkarosserie zwischen einer B- und C-Säule,
- Figur 2: eine Ansicht von oben auf den in der Figur 1 gezeigten Bodenabschnitt und
- Figur 3: eine Schnittansicht längs der Linie III-III in der Figur 2.

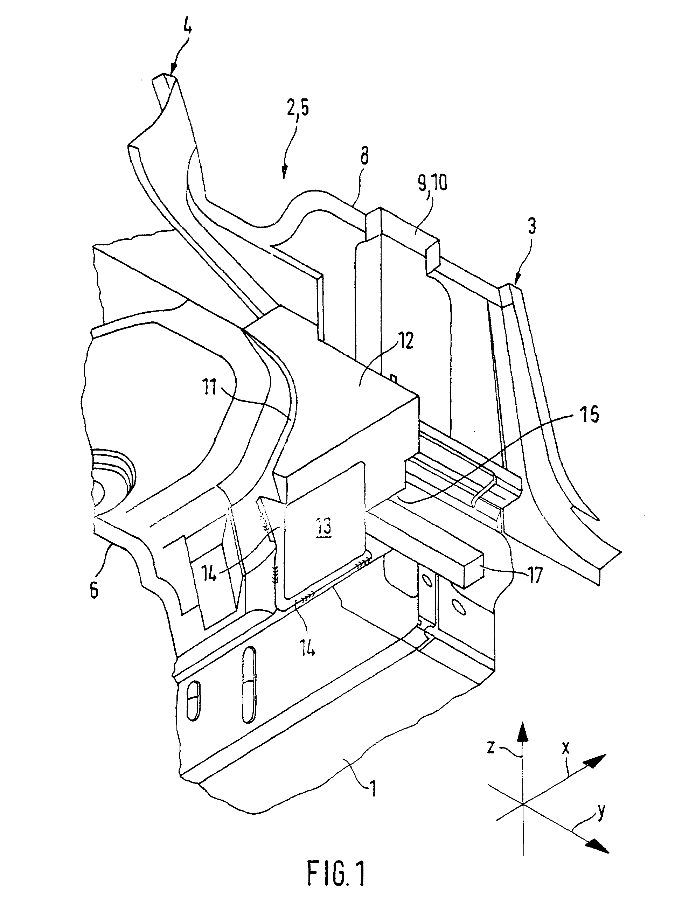

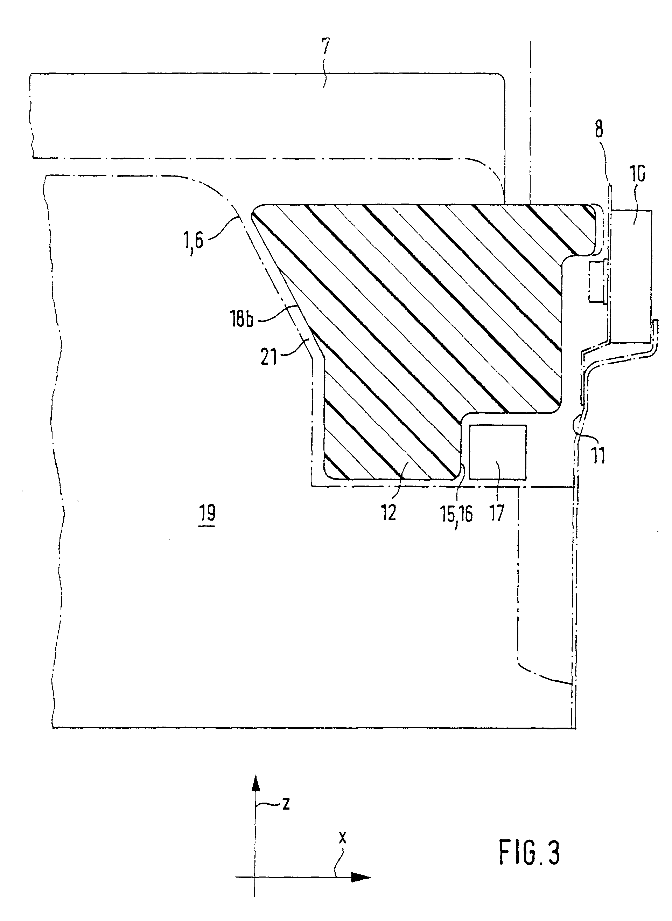

Die Figur 1 zeigt einen Bodenabschnitt 1 einer Fahrzeugkarosserie 2 zwischen einer B-Säule 3 und einer C-Säule 4 eines nicht dargestellten Kraftfahrzeuges 5, insbesondere eines Personenkraftwagens. Der Bodenabschnitt 1 weist einen stufenförmigen Absatz 6 zur Ausbildung einer in der Figur 3 teilweise gezeigten Rücksitzbank 7 auf. Zwischen der B-Säule 3 und der C-Säule 4 ist in der gezeigten Ausführungsform statt einer Tür eine Seitenwand 8 vorgesehen. In der Seitenwand 8 ist eine Aussparung 9 zur Befestigung eines Montageteils 10 ausgebildet, das in der gezeigten Ausführungsform ein Gurtautomat ist. Zwischen dem stufenförmigen Absatz 6 für die Rücksitzbank 7 und der Seitenwand 8 ergibt sich ein Zwischenraum 11, der vollständig durch ein Crashelement 12 ausgefüllt ist.

Das Crashelement 12 wird in Fahrzeugquerrichtung x nach außen durch die Seitenwand 8 und in Richtung des Fahrzeuginnenraumes durch den stufenförmigen Absatz 6 in seiner Lage gehaltert. In Fahrzeuglängsrichtung y ist das Crashelement 12 nach hinten in Richtung eines nicht dargestellten Fahrzeughecks durch die Anbindung des stufenförmigen Absatzes 6 an die Seitenwand 8 bzw. an die Fahrzeugkarosserie 2 in seiner Position festgelegt. Ein Stützblech 13 verhindert ein Verrutschen oder Verschieben des Crashelementes 12 nach vorne. Das Stützblech 13 ist in der gezeigten Ausführungsform ein abgewinkeltes Blech, das über Flansche 14 oder direkt an dem stufenförmigen Absatz 6 angeschweißt ist. Das Crashelement 12 ist von oben in vertikaler Richtung z montierbar. Wie aus den Figuren 1 und 3 hervorgeht, weist das Crashelement 12 an seiner Unterseite 15 eine sich in Fahrzeuglängsrichtung y erstreckende Aussparung 16 auf. In der Aussparung 16 verläuft ein Montageteil 17, beispielsweise ein Kabelbaum.

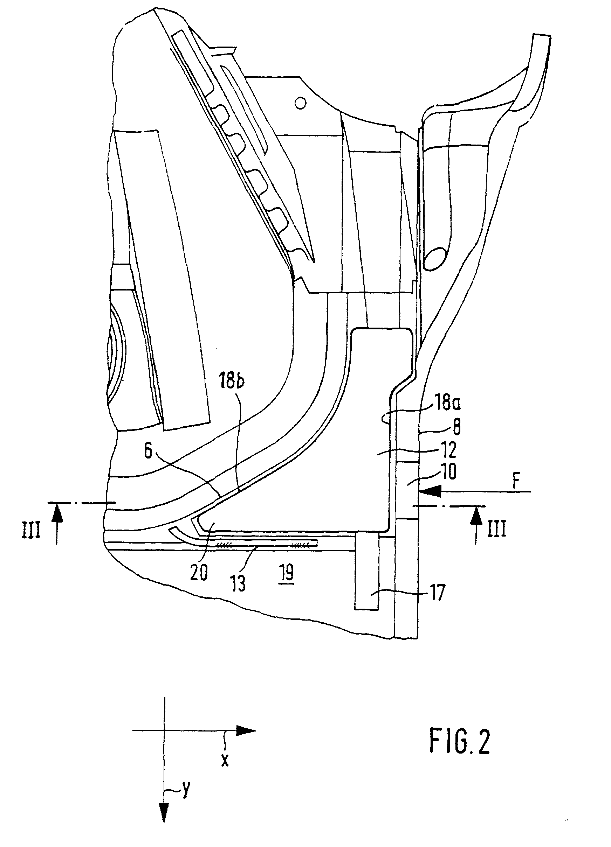

In der Figur 2 ist eine in Fahrzeugquerrichtung x wirkende Aufprallkraft F eingezeichnet, die im vorliegenden Fall auf den Gurtautomaten 10 wirken soll. Durch das unmittelbare Anliegen einer parallel zur Seitenwand 8 verlaufenden Außenfläche 18 a des Crashelementes 12 wird ein Eindringen der Seitenwand 8 bzw. des Gurtautomates 10 in den Fahrzeuginnenraum 19 bzw. den Zwischenraum 11 verhindert. Das Crashelement 12 weist in der Draufsicht eine keilförmig zulaufende Ecke 20 auf. Diese Ecke 20 liegt zum einen mit ihrer Außenfläche 18 b an dem stufenförmigen Absatz 6 und zum anderen an dem Stützblech 13 an. Bei einem Eindringen der Seitenwand 8 in Richtung des Fahrzeuginnenraumes 11, 19 verkeilt sich diese Ecke 20 zwischen dem stufenförmigen Absatz 6 und dem Stützblech 13. Die Festigkeit und Befestigung des Stützbleches 13 ist in der vorliegenden Ausführungsform so ausgelegt, daß das Stützblech 13 sich ab einer bestimmten Höhe einer Aufprallkraft F plastisch verformt. Beispielsweise ist das Stützblech 13 als ein energieabsorbierendes Rollblech ausgebildet. Auf diese Weise wird die durch die Aufprallkraft F bewirkte Energie zumindest teilweise abgebaut. Der größere Anteil der Energieabsorption erfolgt zum einen durch die Seitenwand 8 und im größeren Umfang durch die Struktur des stufenförmigen Absatzes 6 des Bodenabschnittes 1 der Fahrzeugkarosserie 2.

Die Schnittdarstellung der Figur 3 zeigt, daß die zu dem stufenförmigen Absatz 6 zeigende Außenfläche 18 b des Crashelements 12 in vertikaler Richtung z schräg nach oben verläuft Durch den sich daraus ergebenden keilförmigen Querschnitt des Crashelementes 12 ist ein Toleranzausgleich in einfacher Weise möglich. Ein Spalt 21 zwischen dem Crashelement 12 und dem Bodenabschnitt 1 bzw. dem stufenförmigen Absatz 6 wird dadurch minimiert, so daß die Außenfläche 18 großflächig an dem stufenförmigen Absatz 6 des Bodenabschnittes 1 anliegt.

## Patentansprüche

1. Fahrzeug mit einem Crashelement (12), wobei das Crashelement zur Weiterleitung von auf eine Fahrzeugkarosserie einwirkenden Aufprallkräften dient, wobei das Crashelement (12) als ein separates Bauteil in einem sicherheitsrelevanten Hohl- oder Zwischenraum (11) der Fahrzeugkarosserie (2) angeordnet ist, wobei das Crashelement (12) den betreffenden Hohl- oder Zwischenraum (11) so ausfüllt, daß eine großflächige und direkte Übertragung der Aufprallkräfte F von einer äußeren Aufprallstelle bis zu einer zur Energieabsorption dienenden Struktur (6) der Fahrzeugkarosserie (2) erfolgt und wobei zur direkten Übertragung der Aufprallkräfte (F) das Crashelement (12) eine entsprechend hohe Druckfestigkeit aufweist, **dadurch gekennzeichnet, daß** das Crashelement (12) nur in der Montagerichtung frei bewegbar ist, und dass der Hohl- oder Zwischenraum (11) für das Crashelement (12) zur Montage von Bauteilen nutzbar ist.

2. Fahrzeug mit einem Crashelement nach Anspruch 1, **dadurch gekennzeichnet, daß** das Crashelement (12) mit seiner Außenfläche (18 a, 18 b) zumindest teilweise an den dazu benachbarten Karosserieteilen (6, 8) anliegt.

3. Fahrzeug mit einem Crashelement nach den Ansprüchen 1 oder 2, **dadurch gekennzeichnet, dass** zusätzliche Mittel (13) zur Halterung des Crashelementes (12) vorgesehen sind.

4. Fahrzeug mit einem Crashelement nach einem der vorhergehenden Ansprüche, **dadurch gekennzeichnet, daß** das Crashelement (12) ein Schaumteil aus einem Kunststoff oder einem Metall ist.

5. Fahrzeug mit einem Crashelement nach Anspruch 4, **dadurch gekennzeichnet, daß** das Crashelement (12) aus einem Kunststoff-Schaumstoff auf EPS/PPE-Basis ist, dessen maximale Dichte bei 200 bis 300 kg/m³ und dessen maximale Druckfestigkeit zwischen 15 und 25 N/mm² liegt.

6. Fahrzeug mit einem Crashelement nach einem der vorhergehenden Ansprüche, **dadurch gekennzeichnet, daß** das Crashelement (12) mit Aussparungen (16) und/oder Hohlräumen zur Anordnung von Bauteilen (10) versehen ist.

7. Fahrzeug mit einem Crashelement nach einem der vorhergehenden Ansprüche, **dadurch gekennzeichnet, daß** ein zusätzliches Mittel zur Halterung des Crashelementes (12) ein Stützblech (13) ist, durch das das Crashelement (12) zwischen der zur Energieabsorption dienenden Karosseriestruktur (6) und dem Stützblech (13) so eingeklemmt ist, daß sich das Stützblech (13) bei einer entsprechenden Form und Befestigung plastisch beim Einwirken von entsprechend hohen Aufprallkräften (F) verformt.

## Claims

1. A vehicle with a crash element (12), wherein the crash element transmits impact forces acting on a vehicle body, wherein the crash element (12) is a separate component disposed in a cavity or space (11) relevant to the safety of the vehicle body (2), wherein the crash element (12) fills the cavity or space (11) so that the impact forces (F) are transmitted directly over a large area from an outer point of impact to an energy-absorbing structure (6) in the vehicle body (2) and wherein the crash element (12) has sufficient compressive strength for direct transmission of the impact forces (F), **characterised in that** the crash element (12) is freely movable only in the assembly direction, and the cavity or space (11) for the crash element (12) is of use for installation of components.

2. A vehicle with a crash element according to claim 1, **characterised in that** the outer surface (18a, 18b) of the crash element at least partly adjoins the neighbouring parts (6, 8) of the body.

3. A vehicle with a crash element according to claim 1 or claim 2, **characterised in that** additional means (13) are provided for holding the crash element (12).

4. A vehicle with a crash element according to any of the preceding claims, **characterised in that** the crash element (12) is a plastics material or metal expanded part.

5. A vehicle with a crash element according to claim 4, **characterised in that** the crash element (12) is made of EPS-PPE-based expanded foam with a maximum density of 200 to 300 kg/m³ and a maximum compressive strength between 15 and 25 N/mm².

6. A vehicle with a crash element according to any of the preceding claims, **characterised in that** the crash element (12) is formed with recesses (16) and/or cavities for holding components (10).

7. A vehicle with a crash element according to any of the preceding claims, **characterised in that** an additional means for holding the crash element (12) is in the form of a bracing place (13) such that the crash element (12) is clamped between the energy-absorbing body structure (6) and the bracing plate (13) so that the bracing plate (13), if suitably shaped and fastened, is plastically deformed by the impact forces (F) if high enough.

## Revendications

1. Véhicule équipé d'un élément d'absorption de choc (12) selon lequel :
l'élément d'absorption de choc sert à transmettre les efforts d'impact exercés sur la carrosserie du véhicule, l'élément d'absorption de choc (12) étant une pièce séparée placée dans une cavité creuse ou intermédiaire (11) de la carrosserie (2) concernant la sécurité,
l'élément d'absorption de choc (12) remplit la cavité creuse ou cavité intermédiaire (11) de façon à réaliser une transmission directe et sur une grande surface de la force d'impact (F) d'un point d'impact extérieur jusqu'à une structure (6) de la carrosserie (2) servant à absorber l'énergie, alors que pour la transmission directe de la force d'impact (F), l'élément d'absorption de choc (12) présente une résistance à la compression élevée de façon appropriée,
**caractérisé en ce que**
l'élément d'absorption de choc (12) n'est mobile librement que dans le sens du montage, et
la cavité creuse ou intermédiaire (11) recevant l'élément d'absorption de choc (12) est utilisable pour recevoir un montage de pièces.

2. Véhicule équipé d'un élément d'absorption de choc selon la revendication 1,
**caractérisé en ce que**
l'élément d'absorption de choc (12) s'applique par sa surface extérieure (18a, 18b) au moins en partie contre les parties de carrosserie (6, 8) voisines.

3. Véhicule équipé d'un élément d'absorption selon l'une des revendications 1 ou 2,
**caractérisé par**
des moyens supplémentaires (13) pour tenir l'élément d'absorption de choc (12).

4. Véhicule équipé d'un élément d'absorption selon l'une quelconque des revendications précédentes,
**caractérisé en ce que**
l'élément d'absorption de choc (12) est une pièce expansée en matière plastique ou en métal.

5. Véhicule selon la revendication 4,
**caractérisé en ce que**
l'élément d'absorption de choc est une pièce en matière plastique expansée à base de EPS/PPE dont la densité moyenne est de 200 à 300 kg/m³ et la résistance maximale à la compression comprise entre 15 et 25 N/mm².

6. Véhicule selon l'une des revendications précédentes,
**caractérisé en ce que**
l'élément d'absorption de choc (12) comporte des découpes (16) et/ou des cavités pour le montage de pièces (10).

7. Véhicule selon l'une des revendications précédentes,
**caractérisé en ce qu'**
un moyen supplémentaire pour fixer l'élément d'absorption de choc (12) est une tôle de support (13) qui serre l'élément (12) entre la structure de carrosserie (6) servant à absorber l'énergie et la tôle d'appui (13), et cette tôle d'appui (13) en fonction de la forme et de la fixation se déforme plastiquement selon l'effet de forces d'impact d'intensité correspondante (F).
